(19) Europäisches Patentamt
European Patent Office
Office européen des brevets

(11) **EP 3 462 855 B1**

(12) **EUROPÄISCHE PATENTSCHRIFT**

(45) Veröffentlichungstag und Bekanntmachung des Hinweises auf die Patenterteilung:
**23.08.2023   Patentblatt 2023/34**

(21) Anmeldenummer: **17720807.1**

(22) Anmeldetag: **03.05.2017**

(51) Internationale Patentklassifikation (IPC):
***A01M 7/00*** *(2006.01)*

(52) Gemeinsame Patentklassifikation (CPC):
**A01M 7/0057**

(86) Internationale Anmeldenummer:
**PCT/EP2017/060501**

(87) Internationale Veröffentlichungsnummer:
**WO 2017/202581 (30.11.2017 Gazette 2017/48)**

(54) **REGEL- UND/ODER STEUERSYSTEM, LANDWIRTSCHAFTLICHE MASCHINE MIT EINEM SOLCHEN SYSTEM UND VERFAHREN ZUM BETREIBEN EINER LANDWIRTSCHAFTLICHEN MASCHINE**

REGULATING AND/OR CONTROL SYSTEM, AGRICULTURAL MACHINE COMPRISING SUCH A SYSTEM, AND METHOD FOR OPERATING AN AGRICULTURAL MACHINE

SYSTÈME DE RÉGULATION ET/OU DE COMMANDE, MACHINE AGRICOLE COMPRENANT UN TEL SYSTÈME ET PROCÉDÉ PERMETTANT DE FAIRE FONCTIONNER UNE MACHINE AGRICOLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.05.2016   DE 102016109513**

(43) Veröffentlichungstag der Anmeldung:
**10.04.2019   Patentblatt 2019/15**

(73) Patentinhaber:
• **Amazonen-Werke H. Dreyer SE & Co. KG**
  **49205 Hasbergen (DE)**
• **HYDAC Systems & Services GmbH**
  **66280 Sulzbach/Saar (DE)**

(72) Erfinder:
• **KIEFER, Timo**
  **66740 Saarlouis (DE)**

• **KOMMA, Georg**
  **66386 Sankt Ingbert (DE)**
• **KOHL, Peter**
  **66440 Blieskastel (DE)**
• **KRUPP, Patrick**
  **66540 Neunkirchen (DE)**
• **GROSSE PRUES, Frank**
  **49593 Bersenbrück (DE)**
• **HEER, Jochen**
  **49074 Osnabrück (DE)**

(74) Vertreter: **Grünecker Patent- und Rechtsanwälte PartG mbB**
**Leopoldstraße 4**
**80802 München (DE)**

(56) Entgegenhaltungen:
**EP-A1- 2 559 332     WO-A1-2015/040133**

**Beschreibung**

Die Erfindung betrifft ein Regel-und/oder Steuersystem für eine landwirtschaftliche Maschine mit einem Verteilergestänge zum Ausbringen von Material, wie Düngemittel, Pflanzenschutzmittel oder Saatgut. Das Verteilergestänge ist um mindestens eine in Fahrtrichtung verlaufende Drehachse verschwenkbar. Das Regel-und/oder Steuersystem weist wenigstens eine erste Sensoreinrichtung zur Ermittlung der Neigung des Verteilergestänges sowie eine Datenverarbeitungseinrichtung zur Verarbeitung der Sensorsignale der ersten Sensoreinrichtung auf.

Ein solches System ist beispielsweise aus WO 2015 040 133 A1 bekannt.

Als nachteilig wird an dem bekannten System beschrieben, dass die Neigungssensoren bei Kurvenfahrten fehlerhafte Signale liefern. Zur Lösung schlägt WO 2015 040 133 A1 vor, zusätzlich zur Neigung des Gestänges die Drehrate um die in Fahrtrichtung verlaufende Drehachse zu messen. Aus der gemessenen Drehrate wird der Neigungswinkel des Gestänges berechnet und zusammen mit dem gemessenen Neigungswinkel eine fehlerkorrigierte Drehlage des Gestänges ermittelt. Dabei werden nur Wankbewegungen des Trägerfahrzeugs um die in Fahrtrichtung verlaufende Drehachse des Gestänges erfasst.

Der Erfindung liegt die Aufgabe zu Grunde, das Regel- und/oder Steuersystem der eingangs genannten Art mit Blick auf die Messgenauigkeit in unterschiedlichen Fahrsituationen zu verbessern. Der Erfindung liegt ferner die Aufgabe zu Grunde, eine landwirtschaftliche Maschine mit einem solchen System sowie ein Verfahren zum Betreiben einer landwirtschaftlichen Maschine anzugeben.

Die Aufgabe wird hinsichtlich des Regel- und/oder Steuersystems für eine landwirtschaftliche Maschine erfindungsgemäß durch den Gegenstand des Anspruchs 1 gelöst. Mit Blick auf die landwirtschaftliche Maschine und das Verfahren zum Betreiben einer landwirtschaftlichen Maschine wird die Aufgabe erfindungsgemäß durch den Gegenstand des Anspruchs 10 bzw. den Gegenstand des Anspruchs 12 gelöst.

Danach beruht die Erfindung auf den Gedanken, ein Regel- und/oder Steuersystem für eine landwirtschaftliche Maschine anzugeben, das ein Verteilergestänge zum Ausbringen von Material, wie Düngemittel, Pflanzenschutzmittel oder Saatgut aufweist. Das Verteilergestänge ist um wenigstens eine in Fahrtrichtung verlaufende Drehachse verschwenkbar. Das System weist wenigstens eine erste Sensoreinrichtung zur Ermittlung der Neigung des Verteilergestänges und eine Datenverarbeitungseinrichtung zur Verarbeitung der Sensorsignale auf. Die Erfindung zeichnet sich durch eine zweite Sensoreinrichtung zur Ermittlung der Zentrifugalkraft $F_F$ und/oder der Zentrifugalbeschleunigung $a_F$, die auf die erste Sensoreinrichtung bei Kurvenfahrten der Maschine wirkt, aus. Die Datenverarbeitungseinrichtung ist derart ausgebildet, dass ein Neigungsmessfehler der ersten Sensoreinrichtung auf der Basis der Sensorsignale der zweiten Sensoreinrichtung korrigierbar ist.

Die Erfindung hat den Vorteil, dass direkt an der ersten Sensoreinrichtung die Störgröße ermittelt wird, die das Messergebnis verfälscht, nämlich die Zentrifugalkraft $F_F$ und/oder die Zentrifugalbeschleunigung $a_F$. Gerade bei Kurvenfahrten führt dies dazu, dass Messfehler eliminiert werden und die Messgenauigkeit signifikant verbessert wird.

Die Ermittlung der Zentrifugalkraft $F_F$ und/oder der Zentrifugalbeschleunigung $a_F$ kann auf verschiedene Weise erfolgen. Vorzugsweise erfolgt die Ermittlung der Zentrifugalkraft $F_F$ direkt durch Messung durch die zweite Sensoreinrichtung. Die Zentrifugalkraft $F_F$ und/oder der Zentrifugalbeschleunigung $a_F$ kann bspw. auch indirekt durch Berechnung auf der Basis von Fahrzeugparametern, wie bspw. der Drehrate um die Hochachse und der Fahrgeschwindigkeit erfolgen, wobei die Drehrate vorzugsweise durch die zweite Sensoreinrichtung gemessen wird.

Bevorzugte Ausführungen der Erfindung sind in den Unteransprüchen angegeben.

Bei einer bevorzugten Ausführungsform ist die Datenverarbeitungseinrichtung zur Verarbeitung der Fahrgeschwindigkeit der Maschine angepasst. Die Fahrgeschwindigkeit wird bei der Fehlerkorrektur auf der Basis der Sensorsignale der zweiten Sensoreinrichtung berücksichtigt. Konkret geht die Fahrgeschwindigkeit in die Berechnung der Zentrifugalbeschleunigung ein.

Dabei kann die Datenverarbeitungseinrichtung zur Faktorisierung der Fahrgeschwindigkeit angepasst sein, wobei die Faktorisierung verstellbar ist. Dadurch können mögliche konstante Fehler in der Berechnung kompensiert werden.

Die Datenverarbeitungseinrichtung kann zur Verarbeitung eines Lenkwinkels der Maschine angepasst sein, der bei der Fehlerkorrektur auf der Basis der Sensorsignale der zweiten Sensoreinrichtung berücksichtigt wird

Die zweite Sensoreinrichtung kann wenigstens einen Drehratensensor umfassen, der zur Messung der Drehrate des Verteilergestänges und/oder der Maschine um die Hochachse angepasst ist. Basierend auf der Messung der Drehrate um die Hochachse kann die Belastung der ersten Sensoreinrichtung durch Querkräfte beispielsweise bei Kurvenfahrten ermittelt werden. Die Hochachse oder auch Vertikalachse ist die Achse, um die Gierbewegungen des Verteilergestänges und/oder der Maschine erfolgen, deren Winkelgeschwindigkeit durch den Drehratensensor gemessen werden.

Ein weiterer Vorteil der Erfassung der Drehrate um die Hochachse liegt darin, die Fehlerkorrektur bei fortdauernder Kurvenfahrt sehr genau ist. Im Unterschied dazu können bei fortdauernder Kurvenfahrt auf Grund von Drifteffekten bei der Korrektur mittels der bekannten Erfassung der Drehrate um die in Fahrtrichtung verlaufende Drehachse Ungenauigkeiten auftreten.

Bei einer weiteren Ausführungsform kann die zweite Sensoreinrichtung mehrere Drehratenssensoren, insbesondere wenigstens zwei oder drei Drehratensensoren umfassen, deren Meßachsen orthogonal zueinander verlaufen. Dadurch wird die Messung für den Fall verbessert, dass die zweite Sensoreinrichtung selbst geneigt ist. Die Drehrichtungen können auf diese Weise besser bestimmt werden, konkret durch Ermittlung einer resultierenden Drehrate basierend auf den Messungen um die orthogonal zueinander stehenden Drehachsen.

Die erste Sensoreinrichtung kann einen Neigungssensor, insbesondere einen Neigungssensor zur Messung der Neigung des Verteilergestänges bezogen auf eine in Richtung der Erdbeschleunigung verlaufende Referenzachse (Lotrichtung), umfassen. Dies hat den Vorteil, dass auf einen absoluten Neigungswert bezogen auf die Schwerkraftrichtung, d.h. in Richtung der nach unten wirkenden Schwerkraft (Gewichtskraft) geregelt werden kann.

Bei einer besonders bevorzugten Ausführung umfasst die erste Sensoreinrichtung einen Sensor zur Ermittlung der Drehrate des Verteilergestänges um die in Fahrtrichtung verlaufende Drehachse des Verteilergestänges. Der Sensor zur Ermittlung der Drehrate kann ein Drehratensensor oder ein Beschleunigungssensor sein. Der Sensor zur Ermittlung der Drehrate des Verteilergestänges kann mit dem Neigungssensor kombiniert sein. Dies hat den Vorteil, dass der Sollwert für die Neigung vom Anwender vorgegeben werden kann. Auf der Basis der Signale des Sensors zur Ermittlung der Drehrate des Verteilergestänges erfolgt die Entkopplung der Maschinenbewegungen von den Gestängebewegungen. Die Datenverarbeitungseinrichtung ist entsprechend angepasst.

Bei der weiteren bevorzugten Ausführung ist wenigstens eine dritte Sensoreinrichtung zu Ermittlung des Abstands des Verteilergestänges vom Boden und/oder vom Pflanzenbestand und/oder von Hindernissen vorgesehen. Mithilfe der dritten Sensoreinrichtung wird die Neigung des Verteilergestänge bezogen auf den Untergrund eingestellt.

Vorzugsweise ist die Datenverarbeitungseinrichtung für einen Automatikmodus jeweils zur Höhen-und/oder Neigungsverstellung des Verteilergestänge und für einen Übersteuerungsmodus jeweils zur Höhen- und/oder Neigungsverstellung des Verteilergestänges konfiguriert. Bei dem Übersteuerungsmodus kann es sich beispielsweise um einen manuellen Übersteuerungsmodus handeln. Die Datenverarbeitungseinrichtung verstellt im Automatikmodus die Gesamthöhe und/oder Gesamtneigung des Verteilergestänges. Im Übersteuerungsmodus übersteuert die Datenverarbeitungseinrichtung wenigstens einen Regelparameter des Automatikmodus, der im Übersteuerungsmodus aktiv ist.

Im Übersteuerungsmodus übersteuert die Datenverarbeitungseinrichtung wenigstens einen Regelparameter des Automatikmodus, insbesondere durch eine manuelle Eingabe. Übersteuerung bedeutet, dass der Automatikmodus im Übersteuerungsmodus aktiv ist bzw. aktiv bleibt, wenn dem Automatikmodus der Übersteuerungsmodus zugeschaltet wird. Mit anderen Worten wird ein Regelparameter des Automatikmodus, bspw. der absolute Neigungswert bezogen auf die Schwerkraftrichtung, im Übersteuerungsmodus gezielt verändert, um dem Anwender der Maschine eine Eingriffsmöglichkeit in die automatische Regelung zu geben, bspw. zur Kollisionsvermeidung.

Bei der Übersteuerung handelt es sich vorzugsweise um eine manuelle Übersteuerung, also eine Übersteuerung die durch eine manuelle Eingabe eines Anwenders zumindest ausgelöst wird. Die manuelle Übersteuerung kann auch die Einstellung des Steuerungsverhaltens durch den Anwender beinhalten. Bei dem Automatikmodus handelt es sich um die Regelung im Normalbetrieb der Maschine.

Durch die Übersteuerung bei aktivem Automatikmodus wird erreicht, dass die aktive Entkopplung der Bewegungen des Verteilergestänges von den Bewegungen der Maschine, bspw. auf Grund des Sensors zur Ermittlung der Drehrate des Verteilergestänges um die in Fahrtrichtung verlaufende Drehachse des Verteilergestänges, erhalten bleibt, selbst wenn ein Eingriff, insbesondere ein manueller Eingriff, in die automatische Regelung erfolgt. Damit kann bspw. auf eine Fahrsituation reagiert werden, die im Automatikmodus nicht oder nicht ausreichend gut bewältigt werden kann, ohne dass dabei die automatische Regelung des Verteilergestänges und damit die Entkoppelung aufgegeben wird. Damit ist ein präziser und somit sicherer Eingriff in die automatische Regelung möglich.

Die Datenverarbeitungseinrichtung ist vorzugsweise für einen manuellen Modus mit starrer Kraftübertragung auf das Verteilergestänge konfiguriert, wobei bei einem Wechsel in einen Entkopplungsmodus mit entkoppeltem Verteilergestänge, insbesondere in den Automatikmodus und/oder in den Übersteuerungsmodus, ein aktueller Neigungswert des Verteilergestänges als neuer Neigungssollwert übernommen wird. Zwischen den vorgenannten Betriebsmodi kann gewechselt werden. Diese Ausführung hat den Vorteil, dass bei einem Wechsel des Betriebsmodus unkontrollierte Gestängebewegungen vermieden werden.

Im Zusammenhang mit der landwirtschaftlichen Maschine zum Ausbringen von Material, wie Düngemittel, Pflanzenschutzmittel oder Saatgut, kann vorzugsweise vorgesehen sein, dass die zweite Sensoreinrichtung zur Ermittlung der Zentrifugalkraft $F_F$ und/oder der Zentrifugalbeschleunigung $a_F$, die auf die erste Sensoreinrichtung bei Kurvenfahrt der Maschine wirkt, auf der Maschine oder auf dem Verteilergestänge angeordnet ist.

Das erfindungsgemäße Verfahren zum Betreiben einer landwirtschaftlichen Maschine beruht darauf, dass Material, wie Düngemittel, Pflanzenschutzmittel oder Saatgut, aus einem Vorratsbehälter durch ein Verteilergestänge ausgebracht wird. In einem Entkopplungsmodus mit entkoppeltem Verteilergestänge, insbesondere in einem Übersteuerungsmodus, wird auf einen absoluten Neigungswert des Verteilergestänges bezogen auf die Schwerkraftrichtung auf der Basis von Sensorsignalen wenigstens einer ersten Sensoreinrichtung zur Ermittlung der Neigung des Verteilergestänges geregelt. Bei Kurvenfahrt wird ein Messfehler der ersten Sensoreinrichtung auf der Basis von Sensorsignalen wenigstens einer zweiten Sensoreinrichtung zur Ermittlung der Zentrifugalkraft $F_F$ und/oder der Zentrifugalbeschleunigung $a_F$ korrigiert, die auf die erste Sensoreinrichtung bei Kurvenfahrt der Maschine wirkt. Dadurch wird die Messgenauigkeit verbessert.

Die Erfindung wird nachfolgend anhand von Ausführungsbeispielen unter Bezug auf die beigefügten schematischen Zeichnungen mit weiteren Einzelheiten näher erläutert.

In diesen zeigen:

Fig. 1    eine Heckansicht einer landwirtschaftlichen Maschine mit einem Regel- und/oder Steuersystem nach einem erfindungsgemäßen Ausführungsbeispiel;

Fig. 2    eine Heckansicht der landwirtschaftlichen Maschine nach Fig. 1, wobei die Aufhängung des Verteilergestänges außerhalb des Schwerpunktes schematisch dargestellt ist;

Fig. 3    zwei Heckansichten der landwirtschaftlichen Maschine nach Fig. 1 bei Geradeausfahrt, wobei in der oberen Darstellung das bodenparallele und in der unteren Darstellung das ausgelenkte Verteilergestänge dargestellt ist;

Fig. 4    zwei Heckansichten der landwirtschaftlichen Maschine nach Fig. 1 bei einer Linkskurve, wobei in der oberen Darstellung das bodenparallele und in der unteren Darstellung das ausgelenkte Verteilergestänge dargestellt ist;

Fig. 5    zwei Heckansichten der landwirtschaftlichen Maschine nach Fig. 1 bei einer Rechtskurve, wobei in der oberen Darstellung das bodenparallele und in der unteren Darstellung das ausgelenkte Verteilergestänge dargestellt ist; und

Fig. 6    eine Heckansicht der landwirtschaftlichen Maschine nach Fig. 1, wobei die Beschleunigungskomponenten bei einer Kurvenfahrt (Linkskurve) dargestellt sind, die auf die erste Sensoreinrichtung wirken.

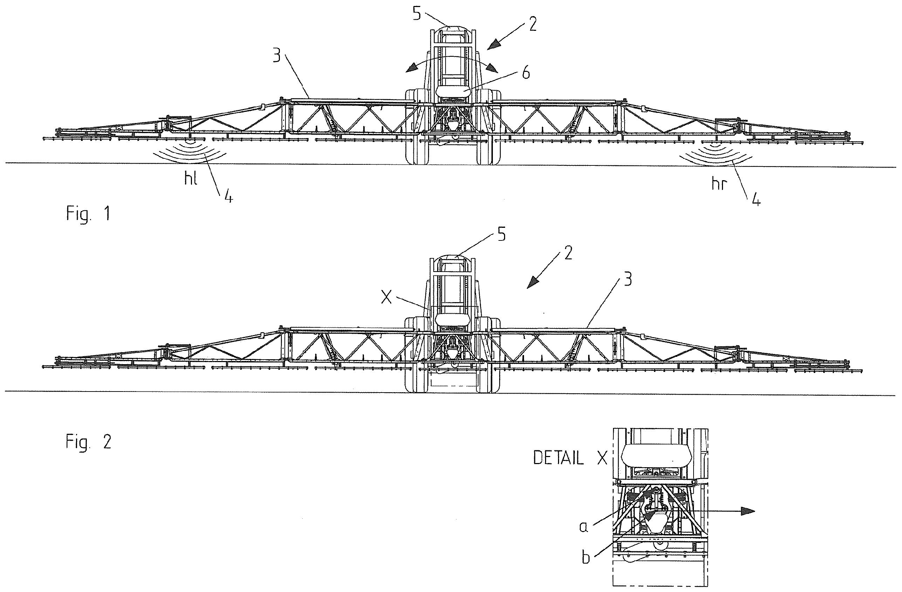

Fig. 1 zeigt in schematischer Weise eine Heckansicht einer landwirtschaftlichen Maschine 2, die als Feldspritze ausgebildet ist. Die Maschine kann von einem Zugfahrzeug gezogen werden, selbstfahrend sein oder an ein Fahrzeug angebaut sein. Die Maschine weist ein Verteilergestänge 3 auf, das mit einem Vorratsbehälter 5 für die Zufuhr des auszubringenden Materials verbunden ist. Bei dem Material kann es sich um Pflanzenschutzmittel, Saatgut oder Düngemittel handeln. Das Verteilergestänge 3 weist in an sich bekannter Weise Düsen auf, die an der Unterseite des Verteilergestänges 3 verteilt angeordnet sind. Die Düsen sind durch ein ebenfalls an sich bekanntes Schlauchsystem mit einer Pumpe und dem Vorratsbehälter 5 verbunden.

Das Verteilergestänge 3 ist zentral am Rahmen der Maschine aufgehängt und um eine in Fahrtrichtung weisende Drehachse verschwenkbar, wie durch den Doppelpfeil angezeigt. Damit ist eine Verstellung der Gesamtneigung des Verteilergestänges 3, also eine Verstellung des ausgeklappten, geraden Verteilergestänges 3 möglich.

Wie in Figur 2 dargestellt, ist bei dem Verteilergestänge 3 die Drehachse a, um die das Verteilergestänge 3 schwenkbar ist, vom Schwerpunkt b des Verteilergestänges 3 beabstandet. Dadurch kommt es bei Kurvenfahrten aufgrund der auf das Verteilergestänge 3 wirkenden Zentrifugalkräfte zu einer Auslenkung des Verteilergestänges 3, die bei der Neigungsregelung berücksichtigt werden muss. Die Zentrifugalkräfte wirken auch auf die für die Neigungsregelung vorgesehenen Neigungssensoren bzw. den Neigungssensor. Um eine Verfälschung des Messergebnisses (Scheinlot) zu vermeiden, ist das Regel- und/oder Steuersystem entsprechend angepasst, wie weiter unten näher beschrieben.

Die Erfindung bzw. die nachfolgend beschriebenen Ausführungsbeispiele beziehen sich auf ein Verteilergestänge gemäß Fig. 2 mit vom Schwerpunkt b des Verteilergestänges 3 beabstandeten Drehachse a. Es ist auch denkbar, die Erfindung bzw. die nachfolgend beschriebenen Ausführungsbeispiele auf ein Verteilergestänge 3 anzuwenden, bei dem die Drehachse a, um die das Verteilergestänge 3 schwenkbar ist, durch den Schwerpunkt b verläuft.

Alternativ kann das Verteilergestänge 3 ein drehfest angeordnetes Mittelteil aufweisen, an dem jeweils ein Auslegerarm verschwenkbar angelenkt ist. Ein Beispiel hierfür ist in der WO 2015/025015 A1 beschrieben. Die beiden Schwenkarme sind in diesem Fall jeweils um eine parallel zur in Fahrtrichtung weisenden Mittelachse des Fahrzeugs verschwenkbar.

Das Verteilergestänge 3 ist überdies höhenverstellbar. Dazu kann das Verteilergestänge an einem vertikal bewegbaren Hubrahmen befestigt sein. Alternativ kann ein Parallelogramm-Gestänge vorgesehen sein, um die Höhenlage zu verstellen.

Als Aktoren für die Neigungs- und Höhenverstellung kommen an sich bekannte Hydrauliksysteme oder andere Stellsysteme in Frage.

Die Erfindung ist nicht auf eine bestimmte Mechanik zur Neigungsverstellung bzw. zur Höhenverstellung des Verteilergestänges 3 eingeschränkt.

Die landwirtschaftliche Maschine 2 weist ein Regel- und/oder Steuersystem auf (nicht dargestellt), das eine Datenverarbeitungseinrichtung zur Verarbeitung von Sensorsignalen aus verschiedenen, nachstehend näher erläuterten Sensoreinrichtungen umfasst.

Das Regel- und oder Steuersystem weist eine erste Sensoreinrichtung auf, die zur Ermittlung der Neigung des Verteilergestänges 3 ausgebildet ist. Die erste Sensoreinrichtung umfasst einen Neigungssensor zur Erfassung der Neigung des Verteilergestänges 3 bezogen auf die Schwerkraftrichtung. Der Neigungssensor beruht auf dem Prinzip, die Neigung des Verteilergestänges 3 gegenüber der durch die Schwerkraft vorgegebenen Lotrichtung bzw. der Richtung der Erdbeschleunigung zu messen. Dies kann in an sich bekannter Weise durch ein Pendel erfolgen, dass mechanisch oder elektromagnetisch gelagert ist und dessen Lage elektronisch, induktiv, kapazitiv oder optisch gemessen wird. Ein Beispiel für ein solches Pendel ist ein System aus zwei nebeneinanderliegenden Plattenkondensatoren, die eine gemeinsame mittlere Platte verwenden. Wird der Sensor geneigt, verschiebt sich aufgrund der Erdbeschleunigung die mittlere Platte des Differentialkondensators, sodass sich das Kapazitätsverhältnis ändert. Diese Änderung wird ausgewertet und ein entsprechendes Ausgangssignal erzeugt. Bei mikroelektromechanischen Sensoren wird die Auslenkung gegenüber der Erdbeschleunigungsrichtung durch ein Feder-Masse-System ermittelt.

Die erste Sensoreinrichtung kann zusätzlich zum Neigungssensor einen weiteren Sensor zur Ermittlung der Drehrate des Verteilergestänges um die in Fahrtrichtung verlaufende Drehachse a des Verteilergestänges umfassen. Dabei kann es sich um einen Drehratensensor oder einen Beschleunigungssensor handeln. Bei einem mittig aufgehängten Verteilergestänge 3 kann ein einziger Drehratensensor genügen, der die Winkelgeschwindigkeit bei einer Drehbewegung des Verteilergestänges 3 um die mittig verlaufende Drehachse a misst. Bei einem Verteilergestänge gemäß WO 2015/025015 A1 mit einem drehfesten Mittelteil und schwenkbaren Auslegerarmen wird zweckmäßigerweise jedem Auslegerarm ein eigener Drehratensensor zugeordnet.

Das System weist eine zweite Sensoreinrichtung auf, die zur Erfassung einer Drehrate, d.h. Winkelgeschwindigkeit um die Hochachse des Verteilergestänge oder um die Hochachse des zugehörigen Fahrzeuges angepasst ist. Die Hochachse, auch Gierachse oder Vertikalachse genannt, ist die vertikale Achse des fahrzeugfesten Koordinatensystems. Konkret kann die zweite Sensoreinrichtung einen oder mehrere Drehratensensoren oder Beschleunigungssensoren aufweisen. Zur Verbesserung der Messgenauigkeit können zwei oder drei orthogonal zueinander angebrachte Drehratensensoren vorgesehen sein, die zu einem inertialen Messsystem kombiniert sind.

Zusätzlich zur ersten und zweiten Sensoreinrichtung ist eine dritte Sensoreinrichtung vorgesehen, die den Abstand zwischen dem Verteilergestänge 3 und dem Boden bzw. der Oberfläche des Pflanzenbestands misst. Dabei handelt es sich um Ultraschallsensoren, die am Verteilergestänge 3, insbesondere an den in Fig. 1 dargestellten Außenpositionen am Verteilergestänge 3 angeordnet sind. Andere Sensoren zur Abstandsmessung sind möglich. Bei dem Beispiel gemäß Fig. 1 sind zwei Abstandssensoren 4 zur Messung der linken und rechten Höhe $h_l$, $h_r$ des Verteilergestänges 3 bezogen auf den Boden vorgesehen.

Die erste und zweite Sensoreinrichtung kann an unterschiedlichen Positionen auf dem Verteilergestänge und/oder auf dem Trägerfahrzeug bzw. Zugfahrzeug angeordnet sein.

Das Regel-und/oder Steuersystem arbeitet wie folgt:
Die Datenverarbeitungseinrichtung ermöglicht verschiedene Betriebsmodi. So kann das System zwischen einem Automatikmodus, einem Übersteuerungsmodus und einem manuellen Modus wechseln. Im Automatikmodus wird das Verteilergestänge 3 durch die dritte Sensoreinrichtung, d.h. durch die Abstandssensoren 4 am Verteilergestänge 3 parallel zum Boden bzw. zur Oberfläche des Pflanzenbestandes ausgerichtet. Die hierfür erforderlichen Regelkreise sind an sich bekannt. Im Automatikmodus erfolgt eine aktive Entkopplung der Gestängebewegungen von den Maschinenbewegungen. Hierfür ist die erste Sensoreinrichtung, konkret der Drehratenssensor, der die Winkelgeschwindigkeit um die in Fahrtrichtung verlaufende Drehachse a des Verteilergestänges 3 misst, verantwortlich. Der Sollwert dieser Winkelgeschwindigkeit ist im Automatikmodus auf 0 gesetzt. Daraus resultiert, dass sich die für die Neigung verantwortlichen Aktoren, konkret die Neigungszylinder kontinuierlich mit den Maschinenbewegungen mitbewegen, wodurch eine Übertragung von Kräften und Momenten, die aus den Maschinenbewegungen resultieren, auf das Verteilergestänge 3 vermieden wird. Mit anderen Worten folgen die Neigungszylinder den Relativbewegungen zwischen dem Verteilergestänge 3 und der Maschine 2. Das Verteilergestänge 3 und die Maschine 2 sind also nicht starr durch die Neigungszylinder verbunden.

Im Übersteuerungsmodus hat der Anwender die Möglichkeit, einen Regelparameter so zu ändern, dass die Position, konkret die Neigungsposition des Verteilergestänges 3 verändert wird, ohne dass dabei die aktive Entkopplung beeinträchtigt oder gar beendet wird. Die Beibehaltung der aktiven Entkopplung im Übersteuerungsmodus wird, wie im Automatikmodus, dadurch erreicht, dass der Sollwert für die Drehrate des Verteilergestänges 3 um die in Fahrtrichtung verlaufende Drehachse auf Null gesetzt wird. Die Neigungszylinder bewegen sich kontinuierlich und verhindern eine Übertragung von Kräften oder Momenten von der Maschine 2 auf das Verteilergestänge 3.

Der Regelungseingriff im Übersteuerungsmodus erfolgt anhand von Anwendereingaben bzw. einer Anwendereingabe, die den absoluten Neigungswinkel des Verteilergestänges bezogen auf die Schwerkraftrichtung betrifft. Die als Referenz dienende Schwerkraftrichtung ersetzt die Boden- oder Bestandsoberfläche als Referenz. Damit erfolgt die Neigungsregelung auf einen absoluten Neigungswert relativ zur Schwerkraftrichtung. Die Neigungsregelung ausgehend von der ersten Sensoreinrichtung erfolgt unabhängig von der Abstandsregelung zum Boden bzw. Pflanzenbestand.

Dadurch wird eine Entkoppelung der Maschinenbewegungen von den Bewegungen des Verteilergestänges 3 unabhängig vom tatsächlichen Abstand zum Boden ermöglicht. Der Sollwert für die Neigung wird vom jeweiligen Anwender vorgegeben. Die Neigungsregelung regelt um den vorgegebenen Sollwert und entkoppelt gleichzeitig aktiv das Gestänge von den Maschinenbewegungen.

Dieser Sollneigungswinkel kann also manuell eingestellt werden, sodass eine Änderung des Neigungswinkels des Verteilergestänges 3 durch Ansteuerung der Neigungszylinder entsprechend den Anwendereingaben erfolgt. Die aktive Entkopplung basierend auf der Drehrate des Verteilergestänges 3 wird gleichzeitig weitergeführt.

Im manuellen Modus ist das Verteilergestänge starr mit der Maschine verbunden. Die Neigungszylinder übertragen Kräfte und Momente aufgrund der Maschinenbewegung auf das Verteilergestänge 3. Die aktive Entkopplung ist im manuellen Modus beendet. Die Neigungszylinder können über das Regelund/oder Steuerungssystem definiert nach links oder rechts verfahren werden, um das Verteilergestänge 3 entsprechend zu verdrehen.

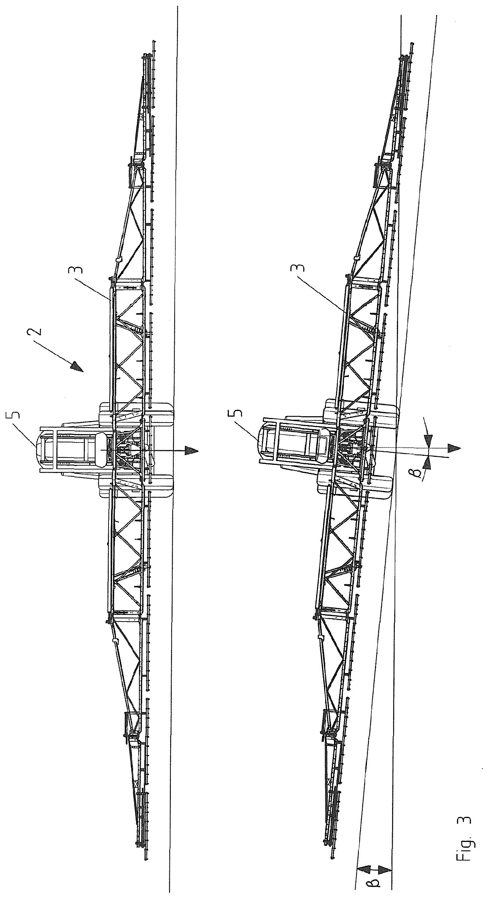

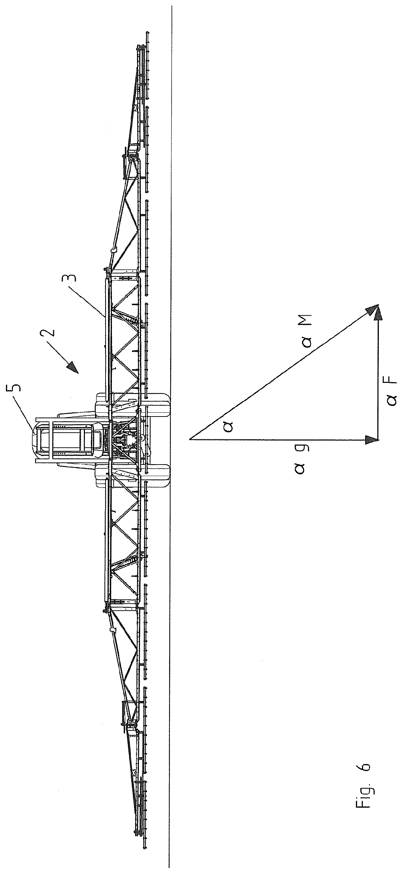

Nachstehend wird anhand der Figuren 3 bis 4 erläutert, welche Kräfte auf den Neigungssensor wirken, wenn sich das Verteilergestänge 3 in unterschiedlichen Fahrzuständen befindet. Dabei wird die Korrektur des Meßergebnisses erläutert. Die Wirkungsweise der Erfindung wird insbesondere anhand der Fig. 6 erläutert.

Fig. 3 zeigt das Verteilergestänge 3 bei Geradeausfahrt. Auf den Neigungssensor wirken keine Querkräfte. In der oberen Darstellung befindet sich das Verteilergestänge 3 in der Parallellage einerseits zum Boden und andererseits zu einer Ebene senkrecht zur Schwerkraftrichtung. Der gemessene und tatsächliche Winkel zwischen der Hochachse und in der Richtung der Erdbeschleunigung (Schwerkraftrichtung) ist 0°. In der unteren Darstellung ist die Maschine 2 zusammen mit dem Verteilergestänge 3 seitlich geneigt, beispielsweise durch einseitiges Fahren in einer Furche. Die Referenzebene normal zur Schwerkraftrichtung stimmt mit der schematisch dargestellten Bodenoberfläche nicht überein, sondern weicht um den Winkel Beta von der Bodenoberfläche ab. Entsprechendes gilt für die Normale auf die Referenzebene, die um den Winkel Beta von der Schwerkraftrichtung abweicht. Der Neigungssensor erfasst die Ausrichtung des Verteilergestänges 3 bezogen auf die Richtung der Erdbeschleunigung (Schwerkraftrichtung) senkrecht zum Boden, wie in der unteren Darstellung zu sehen. Bei Geradeausfahrt wirken keine Querkräfte auf den Neigungssensor. Daher stimmen sowohl in der Parallellage (obere Darstellung) als auch in der geneigten Lage (untere Darstellung) der gemessene und der tatsächliche Winkel überein.

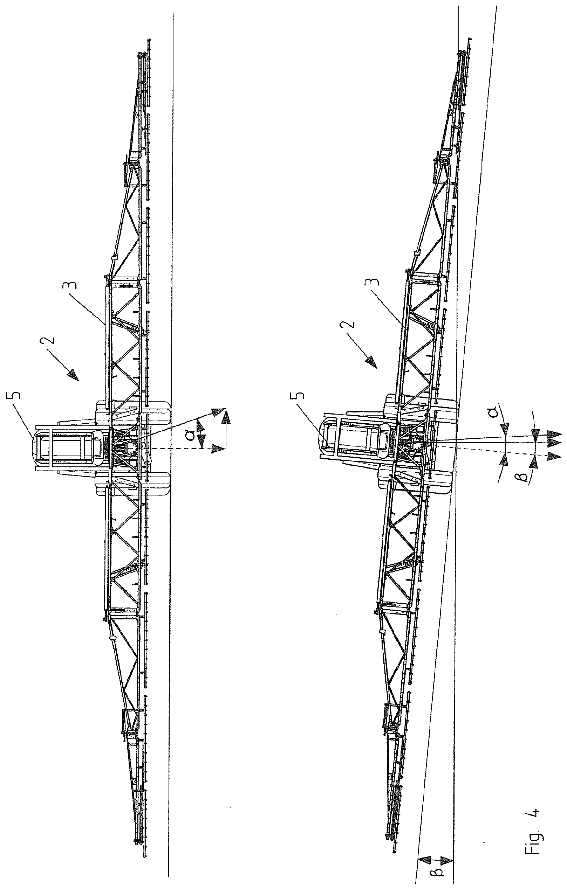

Bei einer Linkskurve, wie in Figur 4 dargestellt, treten Querbeschleunigungen bzw. Fliehkräfte in Abhängigkeit vom Radius der gefahrenen Kurve als auch der Fahrgeschwindigkeit auf. Sowohl in der Parallellage (obere Darstellung) als auch in der geneigten Lage (untere Darstellung) weicht der gemessene Winkel vom tatsächlichen Winkel ohne Fehlerkorrektur ab. Im Beispiel gemäß Fig. 4 beträgt die Abweichung, d.h. der Fehler Alpha = 5°. Konkret beträgt in der Parallellage (obere Darstellung) der tatsächliche Winkel Beta = 0°. Wegen der Querbeschleunigung würde bspw. der gemessene Winkel Alpha = 5° betragen. Wie in Fig. 6 näher erläutert wird dieser Fehler durch das Regel- und/oder Steuersystem, konkret das Regelsystem, kompensiert. Dazu wird die Drehrate der Maschine 2 um die Hochachse und die Fahrgeschwindigkeit der Maschine erfasst und bei der Fehlerkorrektur berücksichtigt. In der geneigten Lage (untere Darstellung der Fig. 4) beträgt beispielsweise der tatsächliche Winkel Beta = 3°. Wegen der Neigung des Verteilergestänges im Uhrzeigersinn wird bei der gefahrenen Linkskurve die Abweichung zum tatsächlichen Winkel Beta addiert, so dass ohne Korrektur der gemessene Winkel 8° betragen würde.

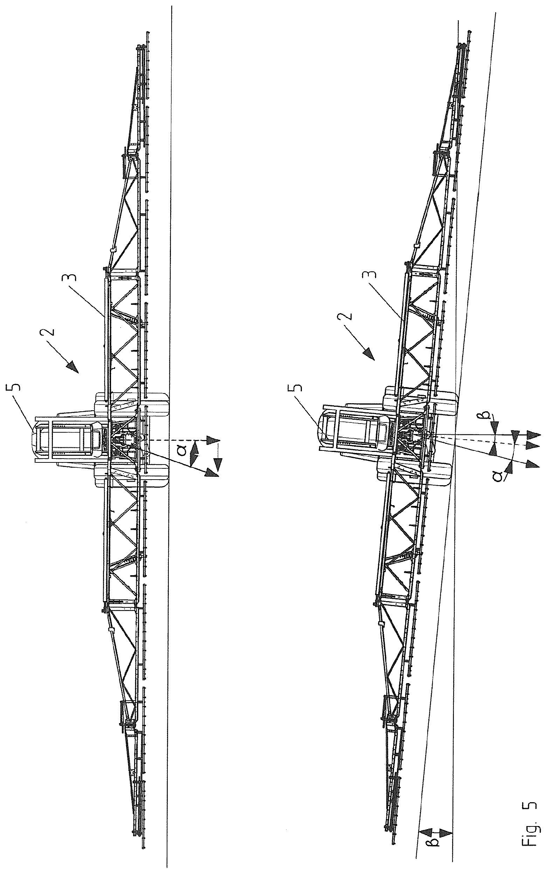

In Fig. 5 ist der Fahrzustand bei einer Rechtskurve gezeigt. Dort treten wiederum Querbeschleunigungen bzw. Fliehkräfte in Abhängigkeit vom Kurvenradius und der Fahrgeschwindigkeit auf, die zu einer Abweichung des gemessenen vom tatsächlichen Winkel führen. Da die Querbeschleunigung in der entgegengesetzten Richtung im Vergleich zur Linkskurve wirken, würde die Abweichung Alpha = -3° betragen, wobei in der Parallellage (obere Darstellung) der tatsächliche Winkel Beta = 0° und in der geneigten Lage (untere Darstellung) beispielsweise der tatsächliche Winkel Beta = 2° beträgt. Die Fehlerabweichung wegen der Querbeschleunigung (Alpha = -3°) würde ohne Korrektur zu einem gemessenen Winkel von -1° führen.

Fig. 6 zeigt das Beschleunigungsdiagramm im Fall einer Linkskurve (siehe Fig. 4), aus dem die Querbeschleunigung und somit die Zentrifugalkraft ersichtlich ist, die auf den Neigungssensor wirkt und zu einem Messfehler führt, der durch die Erfindung bzw. das erfindungsgemäße Ausführungsbeispiel korrigiert wird. Das Gestänge ist dabei waagrecht zur Referenzebene normal zur Schwerkraftrichtung und zum natürlichen Horizont ausgerichtet. Ohne Korrektur würde durch den Neigungssensor ein falscher Winkel Alpha zum Horizont erfasst werden (siehe auch Fig. 4, obere Darstellung).

Die Fehlerkorrektur erfolgt in vereinfachter Weise auf der Basis der Drehrate um die Hochachse, die durch die zweite Sensoreinrichtung gemessen wird, und die Fahrgeschwindigkeit, die in an sich bekannter Weise erfasst wird. Dabei wird ein Korrekturterm ermittelt, der die Abweichung der Meßbeschleunigung $a_M$ von der Erdbeschleunigung $a_G$ korrigiert.

In der Datenverarbeitungseinrichtung ist ein entsprechender Korrekturalgorithmus hinterlegt. Die Erfindungen oder die vorstehend genannten Ausführungsbeispiele sind nicht auf den nachfolgend wiedergegebenen Algorithmus eingeschränkt, der als ein mögliches Beispiel zu verstehen ist, wie der durch die Querkräfte auftretende Messfehler korrigiert werden kann, wobei die Drehrate um die Hochachse und die Fahrgeschwindigkeit der Maschine berücksichtigt werden.

Dabei sind

r = Radius der Kurve, die die Maschine 2 fährt
v = Fahrgeschwindigkeit der Maschine 2
$\dot{\varphi}$ = Drehrate um die Hochachse der Maschine 2
$a_g$ = Erdbeschleunigung
$a_M$ = Messbeschleunigung
$a_F$ = Zentrifugalbeschleunigung

$$Kreisradius\ r\ =\ \frac{v}{\dot{\varphi}}$$

$$Zentrifugalbeschleunigung\ a_F = \frac{v^2}{r} = v * \dot{\varphi}$$

$$Messbeschleunigung\ \ a_M = \sqrt{a_g{}^2 + a_F{}^2}$$

$$Winkelfehler\ \sin\alpha_F = \frac{a_F}{\sqrt{a_g{}^2 + a_F{}^2}}$$

*für kleine Winkel:* sin $\alpha_F$ = $\alpha_F$

$$a_g = 9{,}81$$

$$\boldsymbol{\alpha_g = \alpha_M - \frac{v * \dot{\varphi}}{\sqrt{96 + v^2 * \dot{\varphi}^2}}}$$

Bezugszeichenliste

2    Maschine
3    Verteilergestänge
4    Abstandssensoren
5    Vorratsbehälter
6    Gehäuse für die zweite Sensoreinrichtung
a    Drehachse
b    Schwerpunkt

**Patentansprüche**

1.  Regel- und/oder Steuersystem für eine landwirtschaftliche Maschine (2) mit einem Verteilergestänge (3) zum Ausbringen von Material, wie Düngemittel, Pflanzenschutzmittel oder Saatgut, das um wenigstens eine in Fahrtrichtung verlaufende Drehachse verschwenkbar ist, mit wenigstens einer ersten Sensoreinrichtung zur Ermittlung der Neigung des Verteilergestänges (3) und einer Datenverarbeitungseinrichtung zur Verarbeitung der Sensorsignale **gekennzeichnet durch**

wenigstens eine zweite Sensoreinrichtung zur Ermittlung der Zentrifugalkraft $F_F$ und/oder der Zentrifugalbeschleunigung $a_F$, die auf die erste Sensoreinrichtung bei Kurvenfahrt der Maschine wirkt, wobei die Datenverarbeitungseinrichtung derart ausgebildet ist, dass ein Neigungsmessfehler der ersten Sensoreinrichtung auf der Basis der Sensorsignale der zweiten Sensoreinrichtung korrigierbar ist.

2. System nach Anspruch 1
**dadurch gekennzeichnet, dass**
die Datenverarbeitungseinrichtung zur Verarbeitung der Fahrgeschwindigkeit der Maschine (2) angepasst ist, die bei der Fehlerkorrektur auf der Basis der Sensorsignale der zweiten Sensoreinrichtung berücksichtigt wird.

3. System nach Anspruch 2
**dadurch gekennzeichnet, dass**
die Datenverarbeitungseinrichtung zur Faktorisierung der Fahrgeschwindigkeit angepasst ist, wobei die Faktorisierung verstellbar ist.

4. System nach einem der vorhergehenden Ansprüche
**dadurch gekennzeichnet, dass**
die Datenverarbeitungseinrichtung zur Verarbeitung eines Lenkwinkels der Maschine (2) angepasst ist, der bei der Fehlerkorrektur auf der Basis der Sensorsignale der zweiten Sensoreinrichtung berücksichtigt wird.

5. System nach einem der vorhergehenden Ansprüche
**dadurch gekennzeichnet, dass**
die zweite Sensoreinrichtung einen Drehratensensor umfasst, der zur Messung der Drehrate des Verteilergestänges und/oder der Maschine um die Hochachse angepasst ist.

6. System nach einem der vorhergehenden Ansprüche
**dadurch gekennzeichnet, dass**
die erste Sensoreinrichtung zur Ermittlung der Neigung des Verteilergestänges (3) einen Neigungssensor oder einen Beschleunigungssensor umfasst.

7. System nach einem der vorhergehenden Ansprüche
**dadurch gekennzeichnet, dass**
wenigstens eine dritte Sensoreinrichtung zur Ermittlung des Abstands des Verteilergestänges (3) vom Boden und/oder vom Pflanzenbestand und/oder von Hindernissen vorgesehen ist.

8. System nach einem der vorhergehenden Ansprüche
**dadurch gekennzeichnet, dass**
die Datenverarbeitungseinrichtung für einen Automatikmodus jeweils zur Höhen- und/oder Neigungsverstellung des Verteilergestänges (3) und für einen Übersteuerungsmodus, insbesondere einen manuellen Übersteuerungsmodus, jeweils zur Höhen- und/oder Neigungsverstellung des Verteilergestänges (3) konfiguriert ist, wobei die Datenverarbeitungseinrichtung im Automatikmodus die Gesamthöhe und/oder Gesamtneigung des Verteilergestänges (3) verstellt und im Übersteuerungsmodus wenigstens einen Regelparameter des Automatikmodus übersteuert, insbesondere manuell übersteuert, der im Übersteuerungsmodus aktiv ist.

9. System nach einem der vorhergehenden Ansprüche
**dadurch gekennzeichnet, dass**
die Datenverarbeitungseinrichtung für einen manuellen Modus mit starrer Kraftübertragung auf das Verteilergestänge (3) konfiguriert ist, wobei bei einem Wechsel in einen Entkopplungsmodus mit entkoppeltem Verteilergestänge (3), insbesondere in den Automatikmodus und/oder in den Übersteuerungsmodus, ein aktueller Neigungswert des Verteilergestänges (3) als neuer Neigungssollwert übernommen wird.

10. Landwirtschaftliche Maschine zum Ausbringen von Material, wie Düngemittel, Pflanzenschutzmittel oder Saatgut, mit einem Verteilergestänge (3) und einem Regel- und/oder Steuersystem nach einem der vorhergehenden Ansprüche.

11. Maschine nach Anspruch 10

**EP 3 462 855 B1**

**dadurch gekennzeichnet, dass**
die zweite Sensoreinrichtung zur Ermittlung der Zentrifugalkraft $F_F$ und/oder der Zentrifugalbeschleunigung $a_F$, die auf die erste Sensoreinrichtung bei Kurvenfahrt der Maschine wirkt, auf der Maschine oder auf dem Verteilergestänge (3) angeordnet ist.

12. Verfahren zum Betreiben einer landwirtschaftlichen Maschine (2), bei dem Material, wie Düngemittel, Pflanzenschutzmittel oder Saatgut, aus einem Vorratsbehälter (5) durch ein Verteilergestänge (3) ausgebracht wird, wobei in einem Entkopplungsmodus mit entkoppeltem Verteilergestänge (3) insbesondere in einem Übersteuerungsmodus, auf einen absoluten Neigungswert des Verteilergestänges (3) bezogen auf die Schwerkraftrichtung auf der Basis von Sensorsignalen wenigstens einer ersten Sensoreinrichtung zur Ermittlung der Neigung des Verteilergestänges (3) geregelt wird, und bei Kurvenfahrt ein Messfehler der ersten Sensoreinrichtung auf der Basis von Sensorsignalen wenigstens einer zweiten Sensoreinrichtung zur Ermittlung der Zentrifugalkraft $F_F$ und/oder der Zentrifugalbeschleunigung $a_F$ korrigiert wird, die auf die erste Sensoreinrichtung bei Kurvenfahrt der Maschine wirkt.

13. Verfahren nach Anspruch 12
**dadurch gekennzeichnet, dass**
die Fahrgeschwindigkeit und/oder der Lenkwinkel der Maschine (2) bei der Fehlerkorrektur auf der Basis der Sensorsignale der zweiten Sensoreinrichtung berücksichtigt wird.

**Claims**

1. Regulating and/or control system for an agricultural machine (2)

   comprising a distributor linkage (3) for spreading material, such as fertilizer, plant protection products or seeds, which is pivotable about at least one axis of rotation extending in the direction of travel, with at least one first sensor device for determining the inclination of said distributor linkage (3) and a data processing device for processing the sensor signals
   **characterized by**
   at least one second sensor device for determining the centrifugal force $F_F$ and/or the centrifugal acceleration $a_F$ acting upon the first sensor device when the machine is turning corners, where said data processing device is configured such that an inclination measurement error of said first sensor device can be corrected based on the sensor signals of said second sensor device.

2. System according to claim 1,
   **characterized in that**
   said data processing device is adapted to process the travel speed of said machine (2) which is taken into account in the error correction based on the sensor signals of said second sensor device.

3. System according to claim 2,
   **characterized in that**
   said data processing device is adapted to factorize the driving speed, where the factorization is adjustable.

4. System according to one of the preceding claims,
   **characterized in that**
   said data processing device is adapted to process a steering angle of said machine (2) which is taken into account in the error correction based on the sensor signals of said second sensor device.

5. System according to one of the preceding claims,
   **characterized in that**
   said second sensor device comprises an angular rate sensor which is adapted to measure the angular rate of said distributor linkage and/or said machine about the vertical axis.

6. System according to one of the preceding claims,
   **characterized in that**
   said first sensor device for determining the inclination of said distributor linkage (3) comprises an inclination sensor or an acceleration sensor.

9

**7.** System according to one of the preceding claims,
**characterized in that**
at least one third sensor device is provided for determining the distance of said distributor linkage (3) from the ground and/or from the plant population and/or from obstacles.

**8.** System according to one of the preceding claims,
**characterized in that**
said data processing device is configured for an automatic mode for respective height and/or inclination adjustment of said distributor linkage (3) and for an override mode, in particular for a manual override mode, for respective height and/or inclination adjustment of said distributor linkage (3), where said data processing device in the automatic mode adjusts the overall height and/or overall inclination of said distributor linkage (3) and in the override mode overrides at least one control parameter of the automatic mode, in particular manually, which is active in the override mode.

**9.** System according to one of the preceding claims,
**characterized in that**
said data processing device is configured for a manual mode with rigid power transmission to said distributor linkage (3), where a current inclination value of said distributor linkage (3) is adopted as a new inclination set point when changing over to a decoupling mode with a decoupled distributor linkage (3), in particular to the automatic mode and/or to the override mode.

**10.** Agricultural machine for spreading material, such as
fertilizer, plant protection products or seeds, comprising a distributor linkage (3) and a regulating and/or control system according to one of the preceding claims.

**11.** Machine according to claim 10,
**characterized in that**
said second sensor device for determining the centrifugal force $F_F$ and/or the centrifugal acceleration $a_F$ acting upon said first sensor device when the machine is turning corners is arranged on said machine or on said distributor linkage (3).

**12.** Method for operating an agricultural machine (2), in which
material, such as fertilizer, plant protection products or seeds, is spread from a storage container (5) via a distributor linkage (3), where in a decoupling mode with said distributor linkage (3) decoupled, in particular in an override mode, regulation is effected to an absolute inclination value of said distributor linkage (3) relative to the direction of gravity based on sensor signals of at least one first sensor device for determining the inclination of said distributor linkage (3), and when corners are turned, a measurement error of said first sensor device is corrected based on sensor signals of at least one second sensor device for determining the centrifugal force $F_F$ and/or the centrifugal acceleration $a_F$ acting upon said first sensor device when said machine is turning corners.

**13.** Method according to claim 12,
**characterized in that**
the driving speed and/or the steering angle of said machine (2) are taken into account in the correction of errors based on the sensor signals of said second sensor device.

**Revendications**

**1.** Système de régulation et/ou de commande destiné à une machine agricole (2) ayant une tringlerie d'épandage (3) pour distribuer des matériaux, tels que des engrais, des produits phytosanitaires ou des semences, qui peut pivoter autour d'au moins un axe de rotation s'étendant dans le sens de la marche, avec au moins un premier dispositif de détection pour déterminer l'inclinaison de la tringlerie d'épandage (3) et un dispositif de traitement de données pour traiter les signaux de capteur, **caractérisé par** au moins un deuxième dispositif de détection pour déterminer la force centrifuge $F_F$ et/ou l'accélération centrifuge $a_F$ , qui agit sur le premier dispositif de détection lors du virage de la machine, le dispositif de traitement de données étant conçu de telle sorte qu'une erreur de mesure d'inclinaison du premier dispositif de détection peut être corrigée sur la base des signaux de capteur du deuxième dispositif de détection.

**2.** Système selon la revendication 1
**caractérisé en ce que** le moyen de traitement de données est adapté à la vitesse de déplacement de la machine (2) qui est prise en compte dans la correction d'erreur sur la base des signaux de capteur du second dispositif de détection.

**3.** Système selon la revendication 2
**caractérisé en ce que** le dispositif de traitement de données est adapté pour factoriser la vitesse de déplacement, la factorisation étant ajustable.

**4.** Système selon l'une des revendications précédentes
**caractérisé en ce que** le moyen de traitement de données est adapté pour traiter un angle de braquage de la machine (2) qui est pris en compte dans la correction d'erreur sur la base des signaux de capteur du second dispositif de détection.

**5.** Système selon l'une des revendications précédentes
**caractérisé en ce que** le second dispositif de détection comprend un capteur de vitesse de rotation adapté pour mesurer la vitesse de rotation de la tringlerie d'épandage et/ou de la machine autour de l'axe vertical.

**6.** Système selon l'une des revendications précédentes
**caractérisé en ce que** le premier dispositif de détection comprend un capteur d'inclinaison ou un capteur d'accélération pour déterminer l'inclinaison de la tringlerie d'épandage (3).

**7.** Système selon l'une des revendications précédentes
**caractérisé en ce qu'**au moins un troisième dispositif de détection est prévu pour déterminer la distance de la tringlerie d'épandage (3) par rapport au sol et/ou à la végétation et/ou à des obstacles.

**8.** Système selon l'une des revendications précédentes
**caractérisé en ce que** le dispositif de traitement de données est configuré pour un mode automatique, respectivement pour le réglage de la hauteur et/ou de l'inclinaison de la tringlerie d'épandage (3), et pour un mode de surmultiplication, en particulier un mode de surmultiplication manuel, respectivement pour le réglage de la hauteur et/ou de l'inclinaison de la tringlerie d'épandage (3), le dispositif de traitement de données réglant, en mode automatique, la hauteur totale et/ou l'inclinaison totale de la tringlerie d'épandage (3) et, en mode de surmultiplication, surmultipliant, notamment manuellement, au moins un paramètre de régulation du mode automatique qui est actif en mode de surmultiplication.

**9.** Système selon l'une des revendications précédentes
**caractérisé en ce que** le dispositif de traitement de données est configuré pour un mode manuel avec transmission de force rigide sur la tringlerie d'épandage (3), une valeur d'inclinaison actuelle de la tringlerie d'épandage (3) étant reprise comme nouvelle valeur de consigne d'inclinaison lors d'un passage en un mode de découplage avec une tringlerie d'épandage (3) découplée, en particulier en mode automatique et/ou en mode de surmultiplication.

**10.** Machine agricole d'épandage de produits tels que des engrais, des produits phytosanitaires ou des semences, comprenant une tringlerie d'épandage (3) et un système de régulation et/ou de commande selon l'une quelconque des revendications précédentes.

**11.** Machine selon la revendication 10
**caractérisée en ce que** le deuxième dispositif de détection est disposé sur la machine ou sur la tringlerie d'épandage (3) pour déterminer la force centrifuge $F_F$ et/ou l'accélération centrifuge $a_F$, qui agit sur le premier dispositif de détection lors d'une conduite en virage de la machine.

**12.** Procédé pour faire fonctionner une machine agricole (2), dans lequel un matériau, tel qu'un engrais, un produit phytosanitaire ou des semences, est épandu depuis un réservoir (5) par une tringlerie d'épandage (3), dans lequel, dans un mode de découplage avec une tringlerie d'épandage (3) découplée, en particulier dans un mode de surmultiplication, est réglé sur une valeur d'inclinaison absolue de la tringlerie d'épandage (3) par rapport au sens de la gravité sur la base de signaux de capteur d'au moins un premier dispositif de détection pour déterminer l'inclinaison de la tringlerie d'épandage (3), et lors d'une conduite en virage, une erreur de mesure du premier dispositif de détection est corrigée sur la base de signaux de capteur d'au moins un deuxième dispositif de détection pour déterminer la force centrifuge $F_F$ et/ou l'accélération centrifuge $a_F$, qui agit sur le premier dispositif de détection lors de la conduite en virage de la machine.

13. Procédé selon la revendication 12
**caractérisé en ce que** la vitesse de déplacement et/ou l'angle de braquage de la machine (2) sont pris en compte dans la correction d'erreur sur la base des signaux de capteur du deuxième dispositif de détection.

Fig. 1

Fig. 2

DETAIL X

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015040133 A1

- WO 2015025015 A1